Europäisches Patentamt

**European Patent Office**

**Office européen des brevets**

(11) Numéro de publication: **0 270 166 B1**

## (12) FASCICULE DE BREVET EUROPEEN

(45) Date de publication de fascicule du brevet: **03.06.92**

(21) Numéro de dépôt: **87202248.8**

(22) Date de dépôt: **18.11.87**

(51) Int. Cl.⁵: **G02B 27/00**, G02B 27/64, G02B 13/10

�===

54 **Dispositif de rattrapage de distorsion.**

(30) Priorité: **21.11.86 FR 8616234**

(43) Date de publication de la demande:
**08.06.88 Bulletin 88/23**

(45) Mention de la délivrance du brevet:
**03.06.92 Bulletin 92/23**

(84) Etats contractants désignés:
**DE FR GB IT NL SE**

56 Documents cités:
**EP-A- 0 025 335**
**WO-A-81/00499**
**FR-A- 1 222 433**
**GB-A- 1 296 573**
**US-A- 2 821 111**

**OPTICAL ENGINEERING, vol. 21, no. 1, janvier-février 1982, pages 96-104, Society of Photo-Optical Instrumentation Engineers, Bellingham, Washington, US; Y. NETZER: "Line-of-sight steering and stabilization"**

(73) Titulaire: **TELECOMMUNICATIONS RADIOE-LECTRIOUES ET TELEPHONIOUES T.R.T. 88, rue Brillat Savarin**
**F-75013 Paris(FR)**

(84) Etats contractants désignés:
**FR**

(73) Titulaire: **N.V. Philips' Gloeilampenfabrieken Groenewoudseweg 1 NL-5621 BA Eindhoven(NL)**

(84) Etats contractants désignés:
**DE GB IT NL SE**

(72) Inventeur: **Loy, Fernand Société Civile S.P.I.D. 209, rue de l'Université F-75007 Paris(FR)**
Inventeur: **Perrin, Jean-Claude Société Civile S.P.I.D. 209, rue de l'Université F-75007 Paris(FR)**
Inventeur: **Rollin, Joel Société Civile S.P.I.D. 209, rue de l'Université F-75007 Paris(FR)**

(74) Mandataire: **Chaffraix, Jean et al Société Civile S.P.I.D. 156, Boulevard Haussmann F-75008 Paris(FR)**

## Description

L'invention concerne un dispositif de rattrapage de la distorsion différentielle résultant de l'observation simultanée d'un champ de vue en deux endroits distincts à travers une paroi transparente dans une certaine bande spectrale et dont la forme engendre une distorsion dépourvue de symétrie de révolution, les images obtenues par un premier et par un second récepteur sensibles dans ladite bande spectrale et placés respectivement en chacun desdits endroits étant superposées.

De nombreux appareils de visée ou d'enregistrement (caméra CCD, vidicon) embarqués à bord d'avions doivent tenir compte de la présence d'un hublot dont la forme (conique par exemple) distord l'image du paysage : un avion en cours d'essai est, par exemple, équipé d'une caméra vidéo dont l'image est renvoyée au moyen d'un viseur "tête haute" afin de venir se superposer à l'image reçue par l'oeil du pilote. Cette caméra ne pouvant être placée proche de la tête du pilote, la distorsion introduite par le hublot de l'avion n'est pas la même pour l'oeil du pilote et la caméra, car les faisceaux optiques traversent le hublot à des hauteurs différentes et cette traversée crée des écarts d'allure asymétrique. Ces écarts peuvent atteindre des valeurs très importantes (de l'ordre du degré) : il est donc nécessaire de les corriger ou du moins de les réduire. Un rattrapage électronique consistant en un traitement numérique de l'image conduit dans certains cas à des systèmes complexes et encombrants.

L'invention vise à apporter une correction de nature optique qui doit satisfaire aux conditions suivantes :

- Le système ne doit pas altérer la résolution de l'image.
- Il doit être de conception simple, compact et de réglage facile.

La première condition élimine toute possibilité de correction à l'intérieur de la caméra : les solutions du type basculement ou déformation de la surface de réception dégradent généralement la qualité de l'image et demandent des retouches importantes au niveau de l'implantation mécanique et du calcul optique.

Le système proposé est remarquable en ce que ledit dispositif de rattrapage consiste en un système optique selon la revendication 1.

Ledit système optique de rattrapage comporte deux fonctions dont l'ordre peut être inversé : une fonction anamorphose créant ladite variation de longueur suivant une direction et une fonction déviation formant ladite courbure suivant le sens d'une autre direction, l'angle desdites directions pouvant être ajusté à une valeur quelconque pour simuler toutes formes de distorsions et lesdites fonctions d'anamorphose et de déviation étant réalisées au moyen de groupes indépendants. Ces deux fonctions étant indépendantes, on peut corriger diverses distorsions se ramenant à une courbure, une anamorphose ou une combinaison des deux défauts.

L'ensemble optique réalisé par exemple au moyen de prismes ne comporte que des surfaces planes et ne dégrade pas l'image s'il est achromatisé et utilisé en faisceaux parallèles.

La description suivante en regard des dessins annexés, le tout donné à titre d'exemple fera bien comprendre comment l'invention peut être réalisée.

La figure 1 présente les données du problème.

La figure 2 représente les formes de la distorsion différentielle à corriger et de celle introduite par la correction.

La figure 3 montre une vue en perspective du dispositif de l'invention.

Les figures 4a et 4b sont respectivement une coupe horizontale et une coupe verticale d'un exemple de réalisation dudit dispositif.

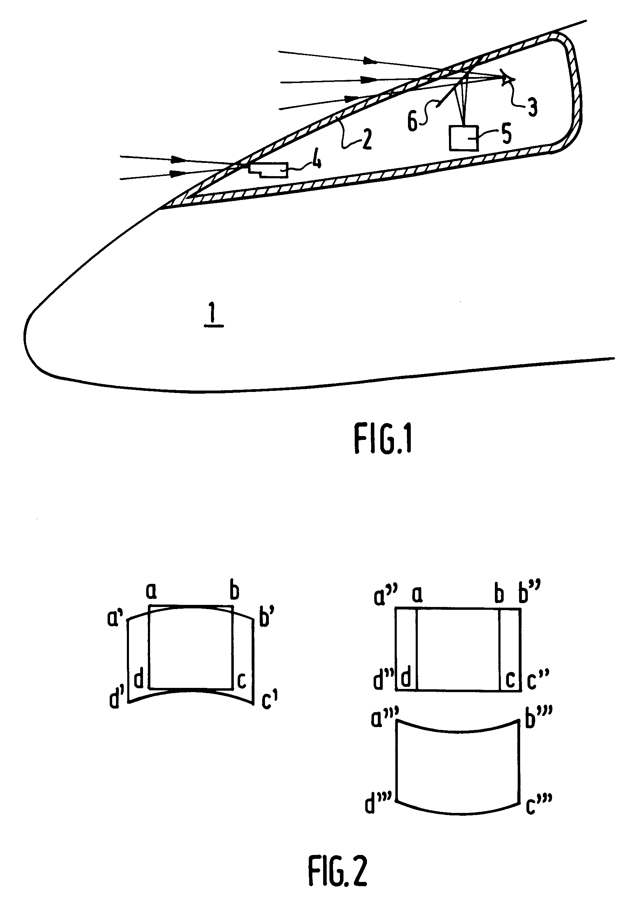

Le dessin de la figure 1 représente le profil avant 1 du fuselage d'un avion dont le hublot 2, ayant la forme d'une portion de cône, est constitué d'une substance transparente dans une bande spectrale déterminée. A travers ce hublot, l'oeil du pilote 3 embrasse le même champ de vision qu'une caméra 4 située à un niveau inférieur et opérant dans ladite bande spectrale. L'image donnée par la caméra est renvoyée au pilote au moyen d'un viseur "tête haute" comportant le moniteur de télévision 5 collimaté à l'infini et le miroir semi-transparent 6. Ainsi, l'image formée par la caméra vient se superposer au paysage vu par le pilote. Le système de visualisation peut projeter sur cette image certaines indications utiles telles que l'attitude de l'avion, sa vitesse, la ligne d'horizon etc. La différence des rayons de courbure du hublot à différents niveaux engendre un certain écart de distorsion entre l'observateur et la caméra de sorte que la superposition n'est pas parfaite. C'est donc cet écart que l'on se propose de réduire.

La figure 2 montre dans ce cas la forme de la distorsion différentielle produite par le hublot de l'avion et celle qui doit être introduite par le dispositif de rattrapage.

Un carré abcd est distordu par le hublot en a'b'c'd', entre la caméra et l'oeil du pilote. Les lignes a'd' et b'c' restant perpendiculaires au côté ab du carré, on peut proposer dans le cas de cet exemple un dispositif correcteur réalisant une anamorphose dans le sens gisement et une courbure dans le sens site.

Ainsi ce dispositif transforme le carré d'origine en un rectangle a"b"c"d" et la courbure introduite en a'"b'" et c'"d'" sera de sens opposé à celle produite entre la caméra et l'oeil du pilote.

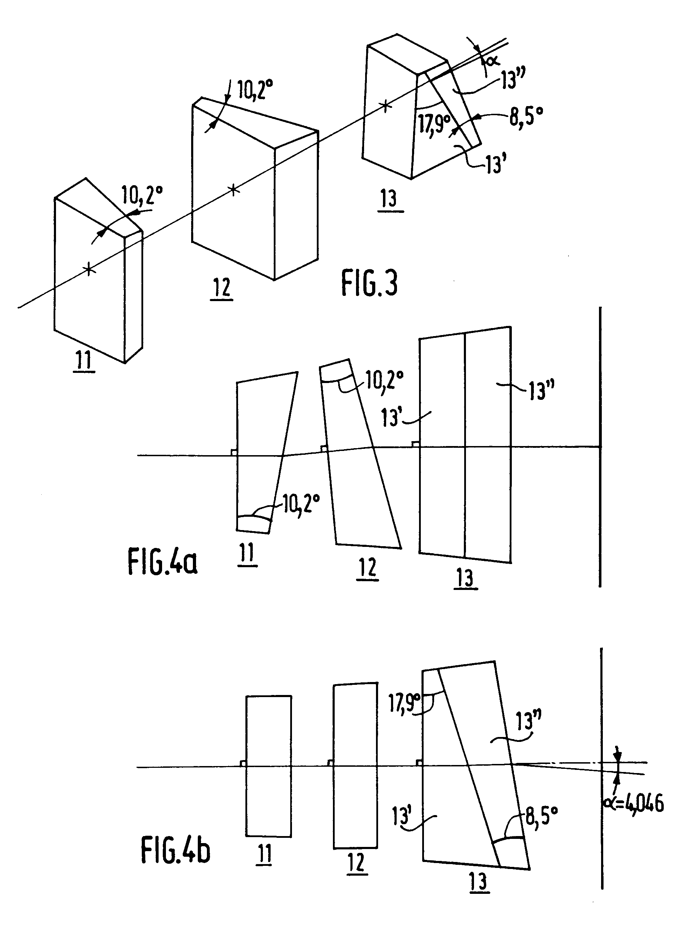

Selon l'invention, le rattrapage est effectué au moyen d'un système optique de structure modulaire monté devant la caméra et dont une vue en perspective est représentée sur la figure 3.

Ce système effectue la correction dans le sens gisement en créant l'anamorphose au moyen d'un ensemble anamorphoseur à deux prismes 11 et 12. Ces deux prismes de même angle et taillés dans le même matériau sont disposés tête bêche ; ainsi cet ensemble ne dévie pas les faisceaux et n'apporte pas de chromatisme sensible. Si le coefficient d'anamorphose est faible, l'anamorphose reste à peu près constante dans le champ.

La correction dans le sens site est ensuite assurée par un prisme déviateur 13 placé derrière l'ensemble anamorphoseur. La fonction déviatrice introduit sur l'image d'une fente parallèle à l'arête du prisme une courbure dont la concavité est tournée vers la base du prisme. Cette courbure provient du fait que le prisme n'est pas attaqué sous le même angle selon que c'est le centre ou le bord de la fente qui est projeté.

La courbure dépend de l'angle du prisme, de son indice et de l'angle d'incidence ; l'image de l'axe optique de la caméra est ainsi déviée d'un angle $\alpha$.

On peut conserver la direction nominale de visée en basculant mécaniquement l'ensemble caméra + prismes.

Pour certaines applications il est nécessaire d'achromatiser le prisme déviateur 13 en le constituant de deux morceaux accolés 13' et 13" dont les angles et les indices ont les valeurs appropriées.

Les figures 4a et 4b montrent respectivement une coupe du dispositif dans le sens gisement (coupe horizontale) et dans le sens site (coupe verticale).

Pour un exemple d'application on a indiqué les valeurs d'angle des prismes valables pour une distance donnée entre l'observateur et la caméra.
Angle des prismes anamorphoseurs : 10,2°.
Angles des prismes déviateurs : 17,9° et 8,5°.
Chromatisme résiduel : 0,2 mrd.
Déviation de l'axe optique caméra : $\alpha$ = 4,046°.

La solution proposée présente donc l'avantage de réduire une distorsion asymétrique sans altérer les performances du système d'enregistrement.

De conception simple et d'encombrement réduit, le dispositif de l'invention peut être associé à une caméra d'enregistrement en vol pour résoudre en partie les problèmes de distorsion rencontrés lors de la superposition d'images obtenues par deux récepteurs situés à des niveaux différents du hublot.

**Revendications**

1. Dispositif de rattrapage de la distorsion différentielle entre deux images résultant de l'observation simultanée d'un champ de vue unique depuis deux endroits distincts où sont respectivement placés un premier (3) et un second (4) récepteurs d'images sensibles dans une bande spectrale prédéterminée, l'observation ayant lieu à travers une paroi transparente (2) dans ladite bande spectrale et dont la forme engendre une distorsion dépourvue de symétrie de révolution, lesdites images ainsi différentiellement distordues et ainsi recueillies sur lesdits récepteurs étant alors superposées, ledit dispositif de rattrapage étant caractérisé par un système optique utilisé en faisceaux parallèles, destiné à être disposé à l'avant de l'un ou l'autre récepteur et construit de façon à causer une variation de longueur des objets du champ de vue selon une première direction, et une courbure de ces objets selon une autre direction, qui entraînent une distorsion telle qu'elle est de sens opposé à ladite distorsion différentielle, ledit système optique comportant pour ce faire des premiers moyens optiques (11,12) pour réaliser une fonction anamorphose créant ladite variation de longueur suivant la première direction et des seconds moyens optiques (13) pour réaliser une fonction déviation formant ladite courbure suivant le sens de l'autre direction, lesdits premier et second moyens étant indépendants l'un de l'autre, et ledit dispositif de rattrapage permettant ainsi d'obtenir une valeur approchée de correction donnant un résidu de distorsion acceptable.

2. Dispositif selon la revendication 1, caractérisé en ce que l'angle desdites directions peut être ajusté à une valeur quelconque pour simuler diverses formes de distorsions.

3. Dispositif selon la revendication 2, caractérisé en ce que la fonction anamorphose et la fonction courbure sont dirigées suivant deux axes perpendiculaires.

4. Dispositif selon la revendication 2, caractérisé en ce que la fonction anamorphose et la fonction courbure sont dirigées suivant deux directions quelconques.

5. Dispositif selon les revendications 3 et 4, caractérisé en ce que ladite fonction d'anamorphose est réalisée au moyen de deux prismes (11,12) de même angle formés dans un matériau de même indice et disposés tête-bêche et ladite fonction de déviation est réalisée au moyen d'au moins un prisme (13;13',13").

**6.** Dispositif selon la revendication 5, caractérisé en ce que le chromatisme introduit par le prisme déviateur est corrigé par l'adjonction d'un autre prisme d'angle et d'indices différents, les deux prismes (13',13") ou non constituant un ensemble achromatique.

## Claims

**1.** A device for correcting the differential distortion between two images resulting from simultaneous observation of one field of view from two distinct locations at which a first (3) and a second (4) image receiver which are sensitive in a predetermined spectral band are arranged, the observation taking place through a transparent shield (2) in said spectral band, which shield has a shape generating a distortion without rotational symmetry, said images thus differentially distorted and collected on said receivers being subsequently superimposed, said correction device being characterized by an optical system using parallel beams, which system is to be arranged on the front side of the one or the other receiver and is constructed to cause a length variation of the objects in the field of view in a first direction and a curvature of these objects in another direction, which variation and curvature lead to a distortion in a sense opposite to said differential distortion, said optical system comprising for this purpose first optical means (11,12) for realizing an anamorphotic function creating said length variation in the first direction and second optical means (13) for realizing an aberrating function forming said curvature in the other direction, said first and second means being independent of each other, and said correction device, with which an approximated correction value can thus be obtained, yielding an acceptable residual distortion.

**2.** A device as claimed in Claim 1, characterized in that the angle of said directions is adjustable to any value for simulating various forms of distortion.

**3.** A device as claimed in Claim 2, characterized in that the anamorphotic function and the aberrating function are directed along two perpendicular axes.

**4.** A device as claimed in Claim 2, characterized in that the anamorphotic function and the aberrating function are given two arbitrary directions.

**5.** A device as claimed in Claims 3 and 4, characterized in that said anamorphotic function is realized by means of two prisms (11,12) having the same angle and formed from a material having the same refractive index and being arranged head-to-tail and in that said aberrating function is realized by means of a single prism

**6.** A device as claimed in Claim 5, characterized in that the chromatism introduced by the aberrating prism is corrected by the addition of another prism having a different angle and a different refractive index, said two prisms (13', 13"), coupled together or not, constituting an achromatic assembly.

## Patentansprüche

**1.** Vorrichtung zur Kompensation der zwischen zwei Bildern auftretenden Differentialverzeichnung bei der gleichzeitigen Betrachtung eines einzelnen Gesichtsfeldes von zwei getrennten Orten aus, an denen ein erster (3) und zweiter (4) für ein vorbestimmtes Spektralband empfindlicher Bildempfänger aufgestellt ist, wobei die Betrachtung durch eine transparente Wand (2) hindurch in dem erwähnten Spektralband erfolgt und die Form der Wand eine Verzeichnung ohne Rotationssymmetrie verursacht, und die in dieser Weise differentiell verzeichneten und so von den Empfängern empfangenen Bilder dann überlagert werden, wobei die Kompensationsvorrichtung gekennzeichnet ist durch ein optisches System mit parallelen Strahlenbündeln, das vor einem der beiden Empfänger aufgestellt wird und so aufgebaut ist, daß eine Längenänderung der Objekte des Gesichtsfeldes in einer ersten Richtung und eine Krümmung dieser Objekte in einer anderen Richtung bewirkt wird, und hiermit eine Verzeichnung einhergeht, die der Differentialverzeichnung entgegengesetzt ist, wobei das optische System hierzu erste optische Mittel (11, 12) zur Realisierung einer Anamorphosefunktion für die erwähnte Längenänderung in der ersten Richtung, und zweite optische Mittel (13) zur Realisierung einer Ablenkfunktion für die erwähnte Krümmung in die andere Richtung enthält, wobei die erwähnten ersten und zweiten Mittel voneinander unabhängig sind und die Kompensationsvorrichtung es erlaubt, auf diese Weise einen angenäherten Korrekturwert zu erhalten, bei dem die Restverzeichnung akzeptabel ist.

**2.** Vorrichtung nach Anspruch 1, dadurch gekennzeichnet, daß der Winkel der erwähnten Richtungen auf einen beliebigen Wert eingestellt werden kann, um verschiedene Verzeichnungsformen zu simulieren.

**3.** Vorrichtung nach Anspruch 2, dadurch gekennzeichnet, daß die Anamorphosefunktion und die Krümmungsfunktion in zwei zueinander senkrechte Richtungen ausgeführt werden.

**4.** Vorrichtung nach Anspruch 2, dadurch gekennzeichnet, daß die Anamorphosefunktion und die Krümmungsfunktion in zwei beliebige Richtungen ausgeführt werden.

**5.** Vorrichtung nach den Ansprüchen 3 und 4, dadurch gekennzeichnet, daß die Anamorphosefunktion mit Hilfe von zwei "Kopf an Fuß" angeordneten Prismen (11, 12) von gleichem Winkel und aus einem Material mit gleicher Brechzahl und die Ablenkfunktion mit Hilfe mindestens eines Prismas (13, 13', 13,'') verwirklicht wird.

**6.** Vorrichtung nach Anspruch 5, dadurch gekennzeichnet, daß der von dem Ablenkprisma eingebrachte Chromatismus durch Hinzufügung eines weiteren Prismas mit unterschiedlichem Winkel und anderer Brechzahl korrigiert wird, wobei die beiden Prismen (13', 13''), ob miteinander verbunden oder nicht, eine achromatische Gesamtheit bilden.

FIG.1

FIG.2

10,2°

10,2°

13"

17,9°

8,5°

13'

13

12

FIG.3

11

10,2°

10,2°

13'

13"

13"

FIG.4a

11

12

13

17,9°

13"

13'

8,5°

α=4,046

FIG.4b

11

12

13